# EUROPÄISCHE PATENTANMELDUNG

(11) **EP 0 626 329 A1**
(43) Veröffentlichungstag der Anmeldung: **30.11.1994**
(21) Anmeldenummer: 94107152.4
(22) Anmeldetag: 06.05.1994
(51) Int. Cl.: B65G 59/10, B65G 47/06

(54) **Vorrichtung zum Vereinzeln von Randbereiche aufweisenden Behältern aus einem Stapel von Behältern und zum Umlegen der Behälter auf einen Auflageflächenbereich**

(30) Priorität: 06.05.1993 DE 4315100
(71) Anmelder: ZWECKFORM ETIKETTIERTECHNIK GESELLSCHAFT MIT BESCHRÄNKTER HAFTUNG, D-83607 Holzkirchen (DE)
(72) Erfinder:
(74) Vertreter: Fincke, Karl Theodor, Dipl.-Phys. Dr.

(57) **Zusammenfassung**

Vorrichtung zum Vereinzeln von Randbereiche aufweisenden Behältern aus einem Stapel von Behältern und zum Umlegen der Behälter auf einen Auflageflächenbereich, dadurch gekennzeichnet, daß der Stapel (1) mit im wesentlichen horizontaler Stapelachse, die Randbereiche (13) der Behälter (5) voran, mittels wenigstens zwei beidseitig des Stapels angeordneter, gegenseitig umlaufender Vereinzelungsschnecken (2a,2b) mit die Randbereiche der Behälter angreifenden, in Richtung zum Auflageflächenbereich (7) zunehmender Steigung dem Auflageflächenbereich zugeführt und auf den Auflageflächenbereich umgelegt werden.

## Beschreibung

Die Erfindung betrifft eine Vorrichtung zum Vereinzeln von Randbereiche aufweisenden Behältern aus einem Stapel von Behältern und zum Umlegen der Behälter auf einen Auflageflächenbereich.

Aufgabe der Erfindung ist es, eine Vorrichtung dieser Art anzugeben, mittels der in einfacher Weise sowohl das Vereinzeln als auch das Umlegen der Behälter erfolgt.

Zur Lösung dieser Aufgabe ist die Vorrichtung dadurch gekennzeichnet, daß der Stapel mit im wesentlichen horizontaler Stapelachse, die Randbereiche der Behälter voran, mittels wenigstens zwei beidseitig des Stapels angeordneter, gegenseitig umlaufender Vereinzelungsschnecken mit die Randbereiche der Behälter angreifenden, in Richtung zum Auflageflächenbereich zunehmender Steigung dem Auflageflächenbereich zugeführt und auf den Auflageflächenbereich umgelegt werden.

Um die Behälter aus dem Auflageflächenbereich wegtransportieren zu können, ist die Vorrichtung bevorzugt dadurch gekennzeichnet, daß den Auflageflächenbereich ein Abführband durchläuft, an dem sich Mitnehmer für die umgelegten Behälter befinden.

Damit die auf den Auflageflächenbereich umgelegten Behälter ruhig bleiben, ist die Vorrichtung bevorzugt dadurch gekennzeichnet, daß sich im Auflageflächenbereich Saugöffnungen zum Ansaugen der umgelegten Behälter an dem Auflageflächenbereich befinden.

Um keinen Luftspalt zwischen den umgelegten Behältern und dem Auflageflächenbereich entstehen zu lassen, ist die Vorrichtung bevorzugt dadurch gekennzeichnet, daß der Auflageflächenbereich eine Führungsvertiefung für das Abführband aufweist.

Um das Umlegen der Behälter zu erleichtern, ist die Vorrichtung bevorzugt dadurch gekennzeichnet, daß sich über dem Auflageflächenbereich wenigstens eine das Umlegen der Behälter unterstützende Blasluftdüse befindet.

Um auch größere Behälter umlegen zu können, ist die Vorrichtung bevorzugt dadurch gekennzeichnet, daß zum Umlegen größerer Behälter oberhalb jeder Vereinzelungsschnecke je eine weitere Vereinzelungsschnecke angeordnet ist.

Die Erfindung wird im folgenden an Ausführungsbeispielen unter Hinweis auf die beigefügten Zeichnungen beschrieben:
- Fig. 1: zeigt eine erste Ausführungsform der Vorrichtung in Seitenansicht, teilweise im Schnitt.

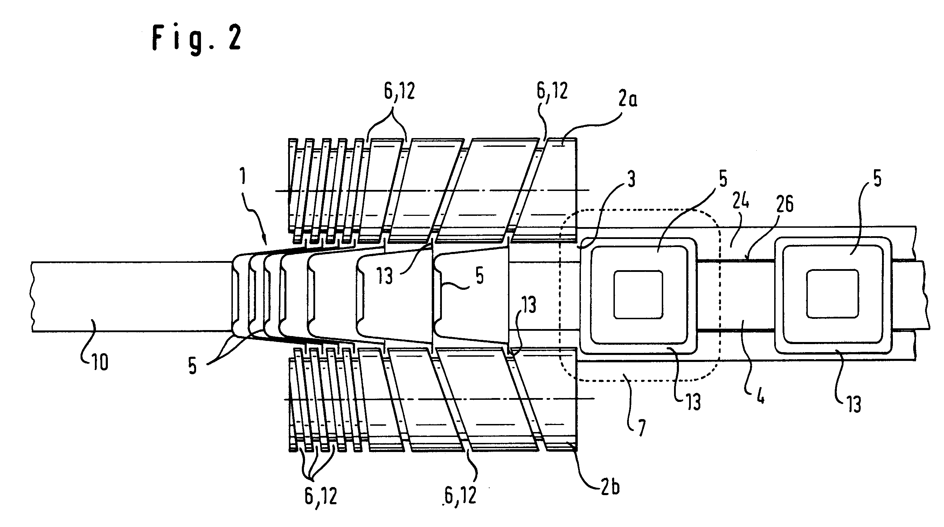

- Fig. 2: zeigt die Vorrichtung nach Fig. 1 in Aufsicht.
- Fig. 3: zeigt einen Schnitt durch den Auflageflächenbereich der Vorrichtung nach Fig. 1 längs der Schnittlinie X - X in Fig. 1 in einer ersten Variante.
- Fig. 4: zeigt einen Schnitt durch den Auflageflächenbereich der Vorrichtung nach Fig. 1 längs der Schnittlinie X - X in Fig. 1 in einer zweiten Variante.
- Fig. 5: zeigt in einer Fig. 1 entsprechenden Ansicht eine zweite Ausführungsform der Vorrichtung.

Die Vorrichtungen dienen dem Vereinzeln von in einem Stapel 1 zugeführten Behältern 5 bzw. 5' und dem Umlegen der dann vereinzelten Behälter 5 bzw. 5'.

Die Behälter 5 bzw. 5' werden den Vorrichtungen im Stapel 1 auf einem um Umlenkrollen 20 gespannten endlosen Zuführband 10 zugeführt. Mittels seitlich des Zuführbands 10 und eines weiterführenden Gleitblechs 11 angeordneter Vereinzelungsschnecken 2a, 2b werden die Behälter 5 bzw. 5' vereinzelt. Eine zunehmende Steigung 6 von Nuten 12 in den Vereinzelungsschnecken 2a, 2b, die Ränder 13 der Behälter 5 bzw. 5' aufnehmen, bewirkt am Schneckenauslauf 3 das gewünschte Umlegen der Behälter 5 bzw. 5'. Die so vereinzelt umgelegten Behälter 5 bzw. 5' können nun von einem weiterführenden, um Umlenkrollen 22 gespannten endlosen, mit Mitnehmern 8 versehenen Abführband 4 übernommen werden. Zur Beruhigung der Behälter 5 bzw. 5' sind im Bereich des Umlegens und der Übernahme in einem Auflageflächenbereich 7 einer Auflageleiste 24 für die Behälter 5 bzw. 5', die eine Führungsvertiefung 26 für das Abführband 4 aufweist, Saugöffnungen 28 vorgesehen, die ein Zurückprellen der umgelegten Behälter 5 bzw. 5' unterbinden.

Die sich gegenüberliegenden Vereinzelungsschnecken 2a, 2b haben gegensinnige Steigungen 6, so daß bei gegensinnigem Antrieb die gleiche Förderrichtung gegeben ist. Dies ist erforderlich, damit die Schräge der Steigungen 6 eine Behälterneigung in gleicher Richtung ergibt.

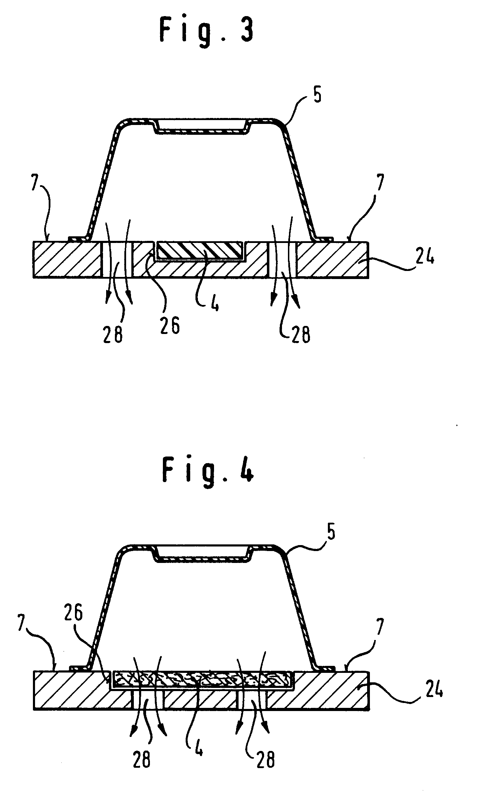

Bei der Variante nach Fig. 3 befinden sich die Saugöffnungen 28 beidseitig einer Führungsvertiefung 26 für das Abführband 4, aber noch innerhalb der umgelegten Behälter 5 in der Auflageleiste 24. Das Abführband 4 braucht daher nicht luftdurchlässig zu sein.

Bei der Variante nach Fig. 4 befinden sich die Saugöffnungen 28 in der Auflageleiste 24 innerhalb der Führungsvertiefung 26. In diesem Fall muß das Abführband 4 porös sein, etwa gelocht sein oder aus einem Gewebe bestehen.

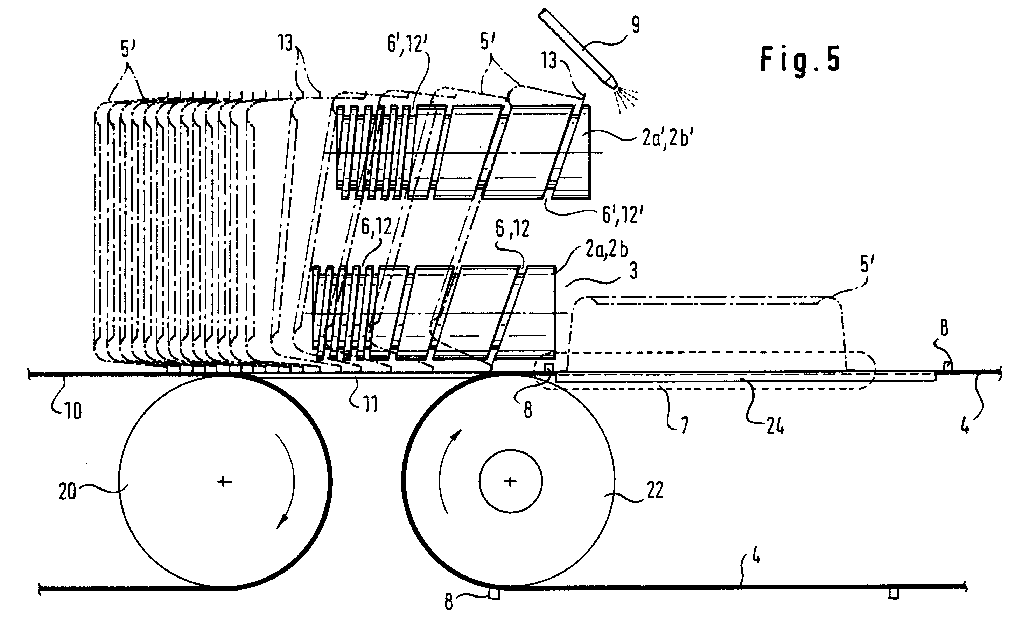

Um auch größere Behälter umlegen zu können, ist es vorteilhaft, Oberhalb der Vereinzelungsschnecken 2a, 2b zwei weitere Vereinzelungsschnecken 2a' und 2b' vorzusehen, wie dies in Fig. 5 dargestellt ist.

Selbstverständlich müssen die Nuten 12 in den Vereinzelungsschnecken 2a, 2b in Flucht zu den Nuten 12' in den Vereinzelungsschnecken 2a', 2b' liegen, was bedeutet, daß auch die Steigungen 6 mit den Steigungen 6' in den Vereinzelungsschnecken 2a', 2b' übereinstimmen müssen.

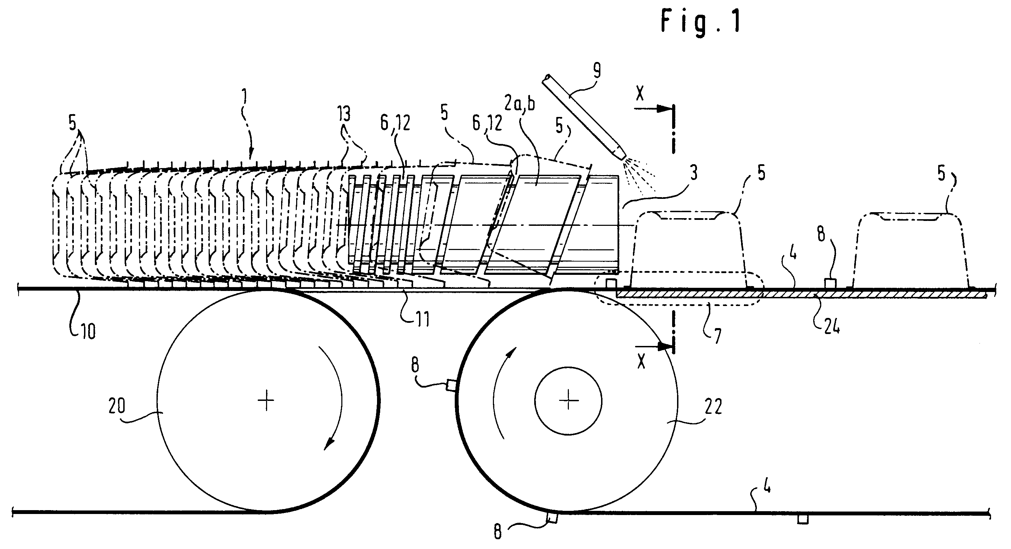

Der Vorgang des Umlegens der Behälter 5 bzw. 5' kann durch Blasluft erleichtert werden, die aus wenigstens einer Düse 9 austritt. Bei der Ausführungsform nach Fig. 5 ist diese Düse 9 bevorzugt höhenverstellbar, um die in Fig. 5 dargestellte Düse 9 in die Position zu bringen, die in Fig. 1 dargestellt ist.

Da die Vereinzelungsschnecken 2a, 2b bzw. 2a', 2b' jeweils zu definierten Zeitpunkten die Behälter 5 bzw. 5' umlegen und freigeben, ist eine synchronisierte Übernahme durch die Mitnehmer 8 an dem Abführband 4 möglich.

Die Behälter 5 bzw. 5' sind vorzugsweise leere Becher, Schalen, Dosen, Gehäuse.

## Patentansprüche

1. Vorrichtung zum Vereinzeln von Randbereiche (13) aufweisenden Behältern (5; 5') aus einem Stapel (1) von Behältern (5; 5') und zum Umlegen der Behälter (5; 5') auf einen Auflageflächenbereich (7), **dadurch gekennzeichnet**, daß der Stapel (1) mit im wesentlichen horizontaler Stapelachse, die Randbereiche (13) der Behälter (5; 5') voran, mittels wenigstens zwei beidseitig des Stapels (1) angeordneter, gegenseitig umlaufender Vereinzelungsschnecken (2a, 2b; 2a', 2b') mit die Randbereiche (13) der Behälter (5; 5') angreifenden, in Richtung zum Auflageflächenbereich (7) zunehmender Steigung dem Auflageflächenbereich (7) zugeführt und auf den Auflageflächenbereich (7) umgelegt werden.

2. Vorrichtung nach Anspruch 1, dadurch gekennzeichnet, daß den Auflageflächenbereich (7) ein Abführband (4) durchläuft, an dem sich Mitnehmer (8) für die umgelegten Behälter (5; 5') befinden.

3. Vorrichtung nach Anspruch 2, dadurch gekennzeichnet, daß sich im Auflageflächenbereich (7) Saugöffnungen (28) zum Ansaugen der umgelegten Behälter (5; 5') an dem Auflageflächenbereich (7) befinden.

4. Vorrichtung nach Anspruch 2 oder 3, dadurch gekennzeichnet, daß der Auflageflächenbereich (7) eine Führungsvertiefung (26) für das Abführband (4) aufweist.

5. Vorrichtung nach einem der vorhergehenden Ansprüche, dadurch gekennzeichnet, daß sich über dem Auflageflächenbereich (7) wenigstens eine das Umlegen der Behälter (5; 5') unterstützende Blasluftdüse (9) befindet.

6. Vorrichtung nach einem der vorhergehenden Ansprüche, dadurch gekennzeichnet, daß zum Umlegen größerer Behälter (5) oberhalb jeder Vereinzelungsschnecke (2a, 2b) je eine weitere Vereinzelungsschnecke (2a', 2b') angeordnet ist.
